# FASCICULE DE BREVET EUROPEEN

(11) **EP 2 746 482 B1**
(45) Date de publication et mention de la délivrance du brevet: **14.10.2015**
(21) Numéro de dépôt: 13198108.6
(22) Date de dépôt: 18.12.2013
(51) Int. Cl.: E04B 1/80

(54) **Produit d'isolation thermique et son procédé de fabrication**
Wärmedämmendes Produkt und Verfahren zu seiner Herstellung
Heat insulating product and its manufacturing process

(30) Priorité: 21.12.2012 FR 1262622
(43) Date de publication de la demande: 25.06.2014
(73) Titulaire: Saint-Gobain Weber, 77170 Servon (FR)
(72) Inventeur: Kubina, Libor, 100 00 Strasnice (CZ)
(74) Mandataire: Douysset, Laurence

(56) Documents cités:
- DE-U1-202004 004 187
- DE-U1-202004 010 695

## Description

L'invention concerne un produit d'isolation thermique se présentant sous forme de plaque et comprenant au moins un panneau isolant sous vide (dénommé encore « VIP ») encapsulé dans une enveloppe de protection faite d'au moins un matériau polymérique rigide d'isolation thermique, le panneau isolant présentant une plus grande capacité d'isolation que le matériau d'isolation enveloppant le VIP.

L'invention est également relative au procédé de fabrication d'un tel produit.

Les VIP sont notamment utilisés pour l'isolation de sols, plafonds, et/ou parois murales, fournissant une isolation thermique efficace, en particulier selon un coefficient de transmission surfacique U de l'ordre de 0,11 W/m².K. Les VIP sont constitués d'un noyau isolant emprisonné entre deux pellicules étanches éventuellement réflectrices, le coeur isolant étant mis en dépression sous vide. Les pellicules étanches sont en général des multicouches de polymères/aluminium ou des composites polymères/tissus de verre.

Les VIP étant fragiles puisqu'un endommagement de la pellicule étanche entraîne une perte du vide, ils sont généralement habillés d'une enveloppe de protection faite d'une matière plastique expansée telle que du polystyrène (EPS). Outre la fonction de protection que fournit le polystyrène, il constitue un matériau supplémentaire isolant thermiquement quant à l'utilisation du produit fini incluant le VIP.

Un tel produit fini ou plaque d'isolation thermique est par exemple décrit dans la demande de brevet WO 2007/097681.

Selon l'invention, le produit d'isolation thermique est caractérisé selon la deuxième partie de la revendication 1.

Ainsi, le cadre joue un rôle de maintien en place du VIP dans son enveloppe et protège son chant. Les deux couches isolantes protègent également mécaniquement le VIP, en particulier en regard de ses faces principales, et constituent des moyens complémentaires d'isolation thermique. Le matériau des couches étant de nature différente de celui du cadre, leur capacité d'isolation sont également différentes. Il est possible d'utiliser une quantité moindre et de réduire le coût de fabrication.

En outre, le recouvrement du cadre par les couches isolantes assure une encapsulation du VIP solide et pérenne.

Le cadre périphérique, qui est rigide, comporte sur une première face, une gorge longitudinale dans laquelle est logé le chant du VIP par emboîtement. La solidarisation du VIP au cadre fait du premier matériau isolant est réalisée via le second matériau rapporté. Le second matériau isolant est de préférence rapporté par moulage. D'une part ce second matériau s'insère dans les éventuels minimes interstices séparant le VIP des parois de la gorge du cadre accueillant ledit VIP, et d'autre part recouvre la jonction du VIP avec le cadre en s'étendant de part et d'autre de cette jonction contre le VIP et en partie contre les faces externes latérales du cadre.

Le cadre périphérique comporte sur chacun de deux flancs latéraux opposés et transversaux à la première face, un épaulement longitudinal s'étendant sur le pourtour du cadre parallèlement et ménageant un volume, du type méplat, qui accueille chacun desdits panneaux en matériau d'isolation thermique.

Ainsi, l'épaulement procure une différence de niveau sur le flanc du cadre de manière à fournir un volume apte à loger le panneau isolant, participant à une meilleure solidarisation de chacune des panneaux avec le cadre. De plus, la face externe de chacun des panneaux est avantageusement coplanaire avec la surface restante du cadre, procurant une enveloppe de surface plane avec pourtant deux matériaux thermiquement isolant distincts.
Par ailleurs, la hauteur de l'épaulement qui correspond à l'épaisseur d'un panneau (couche isolante) est de faible épaisseur fournissant un produit avec VIP d'épaisseur réduite, tout en préservant les performances d'isolation thermique du produit final, voire même en les améliorant avec l'emploi préféré de PU en tant que second matériau thermiquement isolant tel que vu plus loin.

A titre d'exemple, le VIP présente une épaisseur de 30 mm (dimension transversale aux faces principales) et chaque panneau ou couche du second matériau isolant présente une épaisseur de l'ordre de 5 mm, le cadre périphérique possédant une épaisseur de 40 mm.

Par ailleurs, le volume (le méplat) d'accueil du panneau présente une largeur (dimension orthogonale à l'axe longitudinal d'un côté du cadre) de l'ordre de 10 mm pour une largeur de cadre de 50 mm, procurant une surface de solidarisation suffisante entre les deux matériaux isolants respectivement du cadre et des panneaux.

Avantageusement, le produit comporte des moyens de repérage en vue de la découpe ultérieure du cadre, notamment lesdits moyens de repérage étant formés par la ligne de démarcation séparant le cadre des panneaux. Cette ligne constitue le bord de l'épaulement contre lequel le panneau ou couche isolante s'appuie. En variante ou de manière cumulative, les moyens de repérage peuvent être formés par des marquages imprimés sur le cadre.

Ainsi, le cadre profilé constitue un cadre de protection lors du transport des VIP, et sur place lors de l'installation des produits, le cadre peut être découpé au plus proche du VIP sans risque de l'endommager, le chant du VIP restant protégé par l'épaisseur restante de polystyrène et correspondant à la zone transversale au méplat.

De préférence, le cadre comprend plusieurs profilés, en particulier quatre, qui sont aboutés par leurs extrémités distales, de préférence biseautées tel qu'à 45°. La solidarisation des profilés est en particulier obtenue par la présence des couches du second matériau isolant qui recouvrent les méplats sur les flancs des profilés.

Les deux panneaux du second matériau isolant forment deux couches obtenues par moulage. Cette solidarisation, en particulier avec les faces principales du VIP, simplifie grandement le procédé de fabrication du produit final obtenu, et participe à une réduction des coûts de production.

De plus, contrairement à l'art antérieur pour lequel les couches isolantes sont rendues solidaires du VIP par collage, l'invention propose une solidarisation par moulage, supprimant ainsi toute interface entre le VIP et le matériau isolant, ce qui garantit une solidarisation pérenne, et une plus grande protection du VIP.

Enfin, par cette encapsulation via moulage, le procédé de fabrication s'affranchit du problème d'irrégularité de surface que pourrait présenter le VIP, au contraire d'un procédé par collage.

Avantageusement, les deux panneaux faits du second matériau isolant recouvrant le VIP présentent au moins en regard du cadre, une épaisseur inférieure à 10 mm, en particulier au moins de 2 ou 3 mm, de préférence de l'ordre de 5 mm. Par conséquent, le panneau garde une épaisseur réduite.

Les panneaux faits du second matériau isolant sont en un matériau polymérique isolant, en particulier un matériau moussé organique du type polyuréthane (PU), mousse polyisocyanurate (PIR) ou mousse phénolique, de préférence présentant un coefficient de conductivité thermique λ inférieur à 0,028 W/mK.

Le produit final obtenu de l'invention présente avantageusement un coefficient de transmission surfacique U inférieur à 0,015 W/m².K.

Ainsi, le produit, en particulier fait du cadre en EPS et des couches enveloppantes en matériau moussé, présente un excellent coefficient de transmission surfacique U tout en étant d'épaisseur réduite, possédant une épaisseur totale de l'ordre de 40 mm, ce qui est fort appréciable dans son utilisation finale.

Dans une variante préférée de réalisation du produit, celui-ci comporte au moins une excroissance solidaire d'au moins un des panneaux en second matériau thermiquement isolant, cette excroissance étant notamment faite du même premier matériau thermiquement isolant que celui du cadre (tel qu'en EPS). De préférence, cette excroissance présente une forme parallélépipédique.

Avantageusement, l'excroissance est préformée comme le cadre et rendue solidaire de l'enveloppe du VIP lors du moulage des couches isolantes, ne nécessitant ainsi aucun moyen de fixation complémentaire du type colle par exemple. La couche isolante disposée entre le VIP et l'excroissance sert directement de moyens de liaison/solidarisation pour ladite excroissance.

La forme de produit ci-dessus avec excroissance permet par exemple de construire des structures similaires à celles décrites dans la demande de brevet WO 2007/097681.

L'EPS est préféré pour constituer le matériau du cadre et de l'excroissance, notamment car outre ses performances d'isolation thermique, ce matériau est facilement découpable par un outil du type fil chauffant. Lors de l'utilisation des produits finis, il est ainsi aisé d'adapter sur place par découpe les produits aux dimensions idoines et de les assembler par coopération mutuelle (coopération d'une excroissance d'un produit avec la portion dégagée périphérique d'une excroissance d'un produit abouté) afin d'obtenir une structure aux surfaces planes et dimensions attendues.

L'invention est également relative à un procédé de fabrication d'un produit d'isolation thermique tel que décrit dans la revendication 8.

Dans la première étape du procédé, plusieurs profilés sont rapportés par emboîtement contre chacun des côtés du VIP, en particulier par engagement de la tranche du VIP dans une gorge ménagée dans chacun des profilés pour constituer le cadre.

Très préférentiellement, le second matériau isolant qui est injecté est du polyuréthane. Ce matériau présente l'avantage de s'expanser et durcir à température ambiante, le moule n'ayant pas besoin d'être chauffé.

Selon un autre mode de réalisation qui est préféré, le moule peut comporter au moins un logement présentant une forme adaptée pour correspondre à une excroissance engendrée sur l'un des panneaux du produit, ladite excroissance faite du premier matériau isolant étant préformée sous forme d'un bloc puis placée dans ledit logement avant injection du second matériau isolant. Le bloc est disposé à distance du VIP de manière à ménager un volume destiné à accueillir le second matériau isolant injecté et correspondant à l'une des couches isolantes

Selon une variante de réalisation, le moule peut comporter au moins un logement dans lequel est injecté après solidification du second matériau isolant et avant démoulage, une matière faite du premier matériau isolant, ledit logement présentant une forme adaptée pour correspondre à une excroissance engendrée sur l'un des panneaux du produit.

La présente invention est maintenant décrite à l'aide d'exemples uniquement illustratifs et nullement limitatifs de la portée de l'invention, et à partir des illustrations ci-jointes, dans lesquelles :

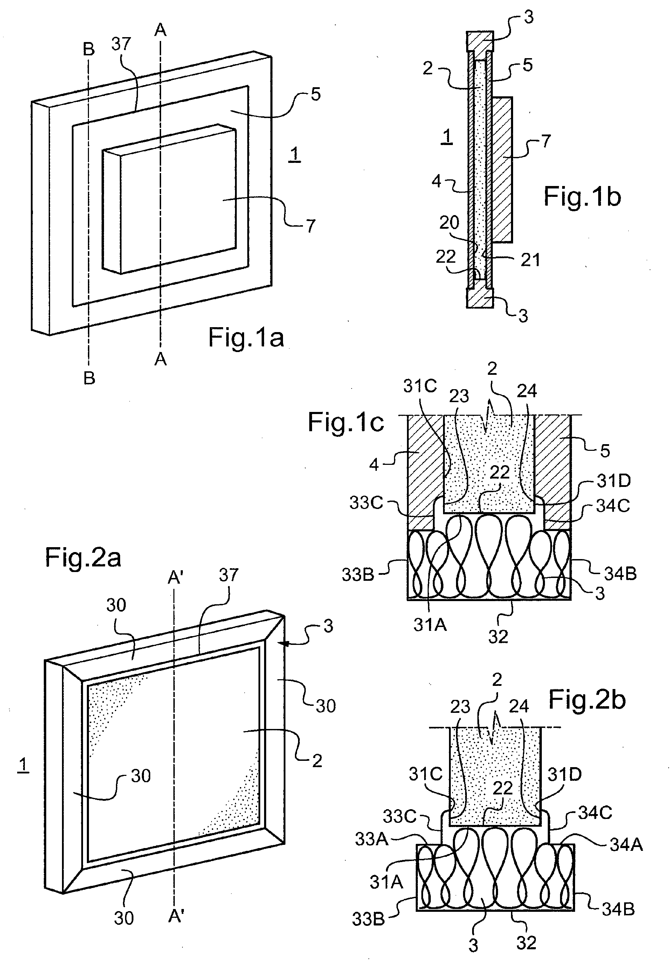

- La figure 1a représente une vue en perspective d'un produit thermiquement isolant selon l'invention ;
- La figure 1 b est une vue de côté et en coupe du produit selon la section B-B de la figure 1a, en bordure du chant du VIP ;
- La figure 1 c est une vue partielle de côté et en coupe du produit selon la section A-A de la figure 1a, le VIP étant en coupe ;
- La figure 2a est une vue en perspective du produit de la figure 1a avant association des couches isolantes du VIP et de l'excroissance, seul étant donc visible le VIP associé au cadre fait du premier matériau isolant;
- La figure 2b est une vue partielle de côté et en coupe du produit selon la section A'-A' de la figure 2a, le VIP étant en coupe ;
- La figure 3 est une vue en perspective partielle du produit de la figure 1 a, le produit étant partiellement découpé, en particulier au niveau du VIP, pour visualiser son intérieur en vue de la seule compréhension de l'invention ; le produit n'est nullement utilisé dans cette configuration ;
- La figure 4 est une vue partielle en perspective d'un profilé du cadre associé au VIP ;
- La figure 5 est une vue en perspective agrandie d'un coin du produit lors de l'assemblage du cadre au VIP ;
- La figure 6 illustre une vue schématique en coupe du moule de fabrication du produit de l'invention.

Le produit thermiquement isolant 1 de l'invention illustré sur les figures 1a à 1 c est destiné à être utilisé en tant que plaque d'interface ou sous-couche d'isolation thermique pour sols, plafonds et/ou parois murales de bâtiment.

Le produit se présente sous la forme d'une plaque parallélépipédique comprenant un panneau isolant sous vide 2, dit VIP, un cadre 3 entourant le VIP et fait d'un premier matériau thermiquement isolant, de préférence en polystyrène expansé (EPS), et deux panneaux ou couches de protection opposées 4 et 5 en un second matériau thermiquement isolant, de préférence en polyuréthane (PU), mousse polyisocyanurate (PIR) ou mousse phénolique, les panneaux revêtant respectivement les deux faces principales opposées du VIP et recouvrant partiellement le cadre 3 à la jointure périphérique du VIP et dudit cadre.

Dans sa forme préférée, le produit 1 comporte au moins une excroissance 7 sur au moins l'une de ses faces. Cette excroissance ou portion en saillie 7 est solidaire d'un des panneaux tel que 5.

De préférence, l'excroissance 7 est faite du même premier matériau thermiquement isolant que celui du cadre 3.

Le VIP 2 est du type connu en soi et n'est pas ici davantage détaillé.

Le VIP 2 est selon l'invention encapsulé dans une enveloppe fermée de protection constituée par le cadre 3 et les couches de revêtement 4 et 5.

Selon l'invention, le produit présente une épaisseur avantageusement réduite, en particulier grâce au choix du matériau thermiquement isolant des couches 4 et 5 qui est de préférence en polyuréthane (PU), en mousse polyisocyanurate (PIR) ou en mousse phénolique, sans toutefois perdre en qualité de performance d'isolation thermique.

De façon très préférée, le matériau thermiquement isolant des couches 4 et 5 est en polyuréthane (PU).

Les dimensions finales en longueur et largeur du produit qui sont imposées par les dimensions du cadre 3 sont optimisées pour ne pas être substantiellement trop importantes par rapport à celles du VIP, et néanmoins permettre si besoin une découpe ad hoc au plus près du VIP en conservant une certaine épaisseur protectrice autour du VIP.

De manière uniquement illustrative et nullement limitative, des exemples de dimensions du VIP et du produit final (sans considérer l'excroissance) sont ci-après donnés.
Produit final N°1 :
   - 1000 mm x 500 mm x 45 mm, avec
   - un VIP de 900 mm x 400 mm x 35 mm.
   L'enveloppe s'étend pour les grandes dimensions sur 50 mm de part et d'autre du VIP, et selon l'épaisseur, sur 5 mm de part et d'autre.
Produit final N°2 :
   - 500 mm x 500 mm x 45 mm, avec
   - un VIP de 400 mm x 400 mm x 35 mm.
   L'enveloppe s'étend pour les grandes dimensions sur 50 mm de part et d'autre du VIP, et selon l'épaisseur, sur 5 mm de part et d'autre.

Pour les produits N°1 et N°2, le cadre 3 de l'enveloppe dépasse suffisamment du VIP pour fournir si besoin des zones de découpe qui s'étendent sur 40 mm au regard des 50 mm de l'enveloppe, les 10 mm restants correspondant au recouvrement du cadre par les couches isolantes.
Produit final N °3 :
   - 1000 mm x 250 mm x 30 mm, avec
   - un VIP de 980 mm x 230 mm x 20 mm.
   L'enveloppe s'étend pour les grandes dimensions sur 10 mm de part et d'autre du VIP, et selon l'épaisseur, sur 5 mm de part et d'autre.
Produit final N°4 :
   - 500 mm x 250 mm x 30 mm, avec
   - un VIP de 480 mm x 230 mm x 20 mm.
   L'enveloppe s'étend pour les grandes dimensions sur 10 mm de part et d'autre du VIP, et selon l'épaisseur, sur 5 mm de part et d'autre.

Pour les produits N°3 et N°4, le cadre 3 de l'enveloppe a été conçu pour juste s'adapter aux dimensions du VIP sans fournir de zone de découpe au-delà de la zone de 10 mm de recouvrement du cadre par les couches isolantes.

En regard des figures 1b et 1c, et 2a et 2b, le VIP 2 présente une forme parallélépipédique et comprend deux faces principales opposées 20 et 21 et un chant périphérique 22 reliant les deux faces.

Le cadre 3 est profilé pour coopérer avec l'ensemble du pourtour du VIP 2 contre d'une part la totalité de la surface du chant 22, et d'autre part des portions surfaciques 23 et 24 des faces respectives 20 et 21 à proximité des arêtes de jonction desdites faces et du chant.

Les portions surfaciques 23 et 24 s'entendent donc par des surfaces de recouvrement sur les faces respectives du VIP suivant la totalité du périmètre de ce dernier, c'est-à-dire le long des quatre côtés du VIP. Ces portions ou zones de recouvrement présentent une largeur, dimension coplanaire avec chaque face et perpendiculaire à la longueur d'un côté, qui est de l'ordre de 5 mm.

Le cadre 3 est de préférence formé de plusieurs profilés 30, ici au nombre de quatre profilés, qui sont rapportés respectivement sur les quatre côtés du VIP.

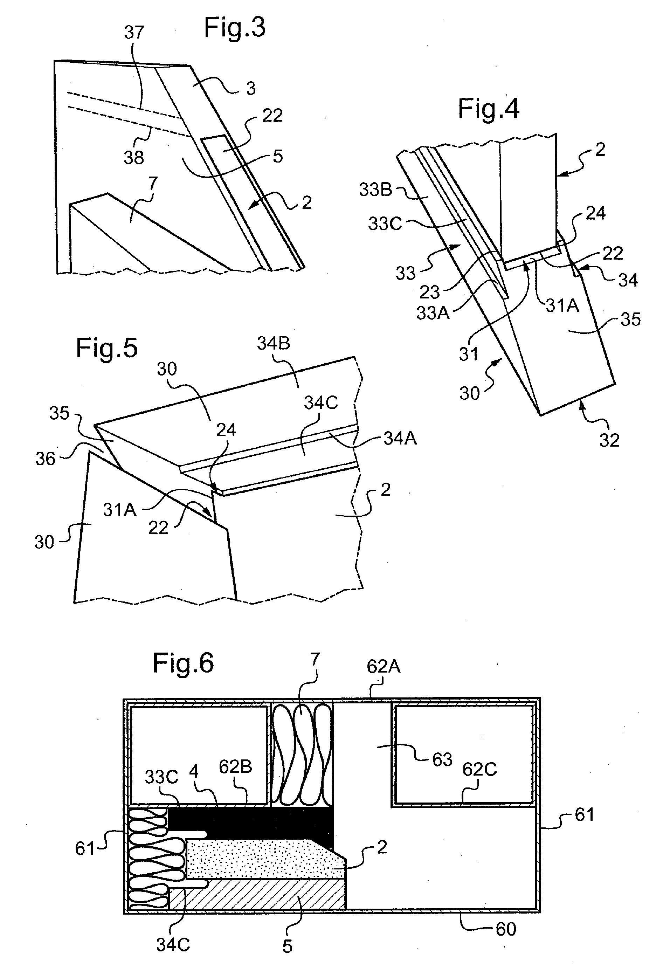

En regard de la figure 4, chaque profilé 30 de forme générale parallélépipédique allongée présente un corps longitudinal de longueur supérieure à un côté du VIP de manière à dépasser de chaque bord du VIP de préférence d'environ 40 mm.

La largeur du corps du profilé, dimension s'étendant parallèlement aux faces du VIP en position associée du profilé au VIP, est fonction de l'intégration ou non d'une zone de découpe pour le produit. Cette largeur est d'au moins 2 ou 3 mm, de préférence de l'ordre de 10 mm, pour assurer sur cette surface le recouvrement par les couches isolantes pour l'encapsulation du VIP.

L'épaisseur de chaque profilé, dimension transversale aux deux autres et parallèle au chant du VIP en position montée du profilé, est au moins supérieure de 10 mm par rapport à l'épaisseur du VIP, selon une répartition de 5 mm de part et d'autre du VIP.

A titre d'exemple, chaque profilé présente une largeur de 50 mm afin d'offrir un zone de découpe de 40 mm de large. L'épaisseur du profilé est de préférence de l'ordre de 40 mm pour un VIP de 30 mm de large.

Le corps du profilé 30 comporte six faces opposées deux à deux, une face longitudinale dite avant 31, une face longitudinale opposée dite arrière 32, deux autres faces longitudinales opposées 33 et 34 dites flancs latéraux qui sont perpendiculaires aux faces avant et arrière et les relient, et deux faces opposées dites d'extrémité 35 et 36 (référence visible sur la figure 5).

En position associée du profilé 30 au VIP 2, la face avant 31 coopère avec le VIP 2, tandis que la face arrière 32 et les flancs latéraux 33 et 34 sont en regard de l'environnement extérieur. Les flancs latéraux 33 et 34 sont parallèles aux faces principales 20 et 21 du VIP.

La face avant 31 du profilé comporte une gorge longitudinale 31 A telle que visible sur les figures 1c, 2b et 4, s'étendant sur la longueur du profilé et présentant un fond 31B et deux parois latérales opposées 31C et 31 D transversales au fond 31B.

La gorge 31A accueille le VIP 2 de façon que le chant 22 de celui-ci repose contre le fond 31B de la gorge, et les parois 31C et 31 D sont respectivement plaquées contre les portions surfaciques 23 et 24 du VIP 2. La hauteur des parois 31C et 31 D correspond à la largeur des portions surfaciques 23 et 24. Cette hauteur est par exemple de l'ordre de 5 mm. Par ailleurs, l'épaisseur de chaque paroi est par exemple de 2 ou 3 mm.

Le VIP 2 est engagé dans le profilé par frottement.

Les faces d'extrémité 35 et 36 de chaque profilé 30 sont avantageusement biseautées à 45° (figure 5) pour faciliter l'association par aboutement des profilés entre eux afin de réaliser le cadre 3.

Plus particulièrement en regard des figures 4 et 5, les flancs latéraux 33 et 34 de chaque profilé présentent chacun en surface un épaulement longitudinal proximal 33A, respectivement 34A générant une différence de niveau entre une première surface dite arrière 33B, respectivement 34B s'étendant vers la face arrière 32 du profilé, et une seconde surface dite avant 33C, respectivement 34C s'étendant vers la face avant 31 du profilé (vers le VIP).

La surface avant 33C, 34C forme un méplat de longueur équivalente au corps du profilé et de largeur de préférence d'au moins 2 ou 3 mm, par exemple de 10 mm. La largeur restante de la surface arrière 33B, 34B est de 40 mm.

La différence de niveau entre la surface arrière et le méplat correspondant à la hauteur/épaisseur de l'épaulement 33A, 34A est inférieur à 10 mm, en particulier d'au moins 2 ou 3 mm, ici de 5 mm.

Le méplat 33C, 34C est destiné à accueillir le second matériau isolant de la plaque 1 de sorte que ce matériau revêtant chaque face principale du VIP et s'étalant selon une couche, recouvre en outre la jonction entre le VIP et le profilé du cadre 3. Le recouvrement du méplat permet d'une part de chevaucher la jonction ainsi étanche du VIP et du cadre, et d'autre part de solidariser les quatre profilés entre eux formant le cadre 3.

Chaque couche du second matériau isolant est ainsi extrêmement réduite de l'ordre de 5 mm, l'épaisseur correspondant à l'épaisseur du méplat (épaisseur entre la face externe du méplat et la face interne de la paroi 31C de la gorge du profilé). Chaque couche présente sa face externe coplanaire avec la surface arrière 33B, respectivement 34B des flancs latéraux du cadre.

Le cadre du produit comprend avantageusement des moyens de repérage pour découper le produit dans des zones hors VIP. Il est ainsi aisé de découper ultérieurement à la fabrication, un produit aux dimensions spécifiques, sans risquer d'abîmer le VIP lors de la découpe. Le problème d'approvisionnement et de stockage de produits isolants à base de VIP, qui doivent être préalablement découpés aux dimensions des VIP, ne se pose plus.

Ces moyens de repérage peuvent être formés par la ligne de démarcation 37 (visible en pointillés sur la figure 3) séparant les deux types de matériaux isolants, respectivement du cadre 3 et des panneaux 4 et 5.

Cette ligne 37 correspond au bord de l'épaulement du profilé. Aussi, la découpe se fait au niveau de la surface arrière 33B, 34B, préservant la partie du cadre au droit du méplat 33C, 34C qui protège encore le VIP. Sur la figure 3 est représentée en ligne pointillée 38, la limite correspondant au bord du VIP ; la zone entre les lignes 37 et 38 étant effectivement recouverte de PU, l'utilisateur sera certain de ne pas découper au droit du VIP.

Le procédé de fabrication du produit de l'invention est à présent décrit au regard du moule de fabrication illustré sur la figure 6.

La figure 6 illustre en coupe le moule en position fermée, seule une moitié du moule étant représentée avec le produit fini.

Le cadre périphérique 3 (les quatre profilés 30) en un premier matériau thermiquement isolant est rapporté sur la totalité du pourtour du VIP, contre le chant périphérique 22 du VIP.

Le cadre et le VIP sont agencés dans un moule 6, le cadre formant entretoise entre les parois du moule et les faces principales 20, 21 du VIP.

Le moule 6 comporte une cavité dont le volume correspond au volume du produit fini de l'invention. Le moule comporte une matrice dont le profil des parois est adapté aux formes et aux dimensions à donner aux surfaces externes des panneaux ou couches 4 et 5. L'excroissance 7 est rendue solidaire des couches de protection 4 et 5 lors de l'étape d'injection du second matériau isolant des couches, le moule présentant un logement adapté à l'accueil de l'excroissance qui est de préférence préformée en se présentant sous la forme d'un bloc rigide.

Le moule comprend une paroi de façade 60 de surface plane et correspondant à la paroi d'ouverture du moule, une paroi latérale périphérique 61, un fond 62 profilé, ici de forme générale en Ω aux lignes droites, présentant une partie médiane 62A en U retourné délimitant un logement 63, la partie médiane 62A étant surélevée par rapport aux deux autres parties distales 62B et 62C planes connectées à la partie médiane et reliées à la paroi latérale périphérique 61. La partie médiane 62A est destinée à accueillir l'excroissance 7 du produit fini.

L'excroissance 7 sous forme de bloc parallélépipédique est insérée dans le logement 63 du moule. Pour garantir dans le moule l'écartement ad hoc entre l'excroissance 7 et le VIP, écartement qui correspond à l'épaisseur de la couche isolante de protection du VIP et de solidarisation avec ladite excroissance, le moule accueille les différents éléments verticalement. Puis, le VIP et son cadre sont introduits dans le moule de manière que le cadre 3 repose contre la paroi latérale 61 et les parties 62B et 62C du fond, la paroi de façade 60 est refermée de façon à s'appuyer sur le cadre 3.

La paroi de façade 60 et les parties 62B et 62C du fond sont dotés d'orifices d'injection pour le second matériau isolant afin de réaliser les couches isolantes.

Une fois l'excroissance, le cadre et le VIP en place dans le moule, le second matériau d'isolation thermique, par exemple du polyuréthane, de la mousse phénolique ou de la mousse polyisocyanurate, est injecté dans le moule en regard de chacune des faces principales 20, 21 du VIP de manière à recouvrir lesdites faces ainsi que les méplats 33C et 34C du cadre.

Selon un autre mode de réalisation, l'excroissance 7 est réalisée lors du moulage. A cet effet, seul le cadre et le VIP sont introduits dans le moule, une fois que le second matériau des couches isolantes a été injecté et solidifié, le matériau isolant (type EPS) destiné à former l'excroissance 7 est injecté dans le logement 63 en U délimité par la partie médiane 62A du fond. Une fois ce dernier matériau solidifié, l'ensemble est démoulé.

## Revendications

1. Produit d'isolation thermique se présentant sous forme d'une plaque et comprenant au moins un panneau isolant (2) sous vide dit VIP et présentant deux faces principales (20, 21) opposées et parallèles et au moins un chant transversal (22) reliant les deux faces (20,21) par deux bords, et une enveloppe de protection thermiquement isolante dans laquelle est intégré le VIP dans lequel l'envetoppe comprend un cadre périphérique (3) en un premier matériau thermiquement isolant, du type polystyrène expansé, entourant et associé au bord et au chant du VIP, et au moins deux panneaux (4, 5) faits d'un second matériau thermiquement isolant distinct du premier matériau du cadre, les panneaux (4,5) étant associés chacun à une des faces principales (20, 21) du VIP en formant deux couches parallèles de part et d'autre desdites faces (20,21) du VIP et recouvrant au moins en partie le cadre (3), ledit cadre (3) comportant sur une première face, une gorge longitudinale (31) dans laquelle est logé le chant (22) du VIP par emboîtement, **caractérisé en ce que** le cadre (3) comporte sur chacun de deux flancs latéraux (33, 34) opposés et transversaux à la première face, un épaulement longitudinal (33A, 34A) s'étendant sur le pourtour du cadre (3) parallèlement et accueillant lesdits panneaux (4, 5) en matériau d'isolation thermique, les deux panneaux (4,5) formant deux couches obtenues par moulage.

2. Produit selon l'une quelconque des revendications précédentes, **caractérisé en ce qu'**il comporte des moyens de repérage en vue de la découpe ultérieure du cadre (3), notamment lesdits moyens de repérage étant formés par la ligne de démarcation séparant le cadre (3) des panneaux (4,5).

3. Produit selon l'une quelconque des revendications précédentes, **caractérisé en ce que** le cadre périphérique (3) comprend plusieurs profilés (30), en particulier quatre, qui sont aboutés par leurs extrémités distales, de préférence biseautées telles qu'à 45°.

4. Produit selon l'une quelconque des revendications précédentes, **caractérisé en ce que** les deux panneaux (4, 5) du second matériau isolant recouvrant le VIP présentent au moins en regard du cadre (3) une épaisseur inférieure à 10 mm, en particulier au moins de 2 ou 3 mm, de préférence de l'ordre de 5 mm.

5. Produit selon l'une quelconque des revendications précédentes, **caractérisé en ce que** les panneaux (4, 5) du second matériau isolant sont en un matériau polymérique isolant, en particulier en matériau organique moussé du type polyuréthane (PU), mousse polyisocyanurate (PIR) ou mousse phénolique de préférence présentant un coefficient de conductivité thermique λ inférieur à 0,028 W/mK.

6. Produit selon l'une quelconque des revendications précédentes, **caractérisé en ce qu'**il présente un coefficient de transmission surfacique U inférieur à 0,015 W/m².K.

7. Produit selon l'une quelconque des revendications précédentes, **caractérisé en ce qu'**il comporte au moins une excroissance (7) solidaire d'au moins un des panneaux isolants (4, 5), notamment faite du même premier matériau thermiquement isolant du cadre (3), de préférence cette excroissance ayant une forme parallélépipédique.

8. Procédé de fabrication d'un produit selon l'une des revendications précédentes, dans lequel:
- un cadre périphérique (3) en un premier matériau thermiquement isolant, notamment en EPS, est rapporté sur la totalité du pourtour d'un panneau thermiquement isolant sous vide dit VIP (2), contre le chant périphérique (22) du VIP, **caractérisé en ce que** ledit cadre (3) comporte sur une première face, une gorge longitudinale (31) dans laquelle est logé le chant (22) du VIP par emboîtement, et sur chacun de deux flancs latéraux (33, 34) opposés et transversaux à la première face, un épaulement longitudinal (33A, 34A) s'étendant sur le pourtour du cadre parallèlement et accueillant lesdits panneaux (4, 5) en matériau d'isolation thermique
- le cadre et le VIP sont agencés dans un moule, le cadre formant entretoise entre les parois du moule et les faces principales (20, 21) du VIP,
- un second matériau d'isolation thermique, de préférence du polyuréthane (PU), en mousse phénolique ou en mousse polyisocyanurate (PIR), est injecté dans le moule en regard de chacune des faces principales (20, 21) du VIP de manière à recouvrir lesdites faces ainsi que des portions du cadre,
- l'ensemble est démoulé.

9. Procédé selon la revendication précédente, **caractérisé en ce que** le cadre (3) comporte plusieurs profilés qui sont rapportés par emboîtement contre chacun des côtés du VIP, en particulier par engagement de la tranche du VIP dans une gorge (31) ménagée dans chacun des profilés.

10. Procédé selon la revendication 8 ou 9, **caractérisé en ce que** le moule comporte au moins un logement (63) dans lequel, avant injection du second matériau d'isolation, est introduit un bloc de second matériau isolant correspondant à une excroissance (7) engendrée sur l'un des panneaux du produit, le bloc étant disposé à distance du VIP de manière à ménager un volume destiné à accueillir le second matériau isolant injecté et correspondant à l'une des couches isolantes.

## Patentansprüche

1. Wärmedämmerzeugnis, das die Form einer Platte aufweist und wenigstens eine Vakuum-Dämmplatte, so genannte VIP (2), umfasst und zwei Hauptflächen (20, 21) aufweist, die entgegengesetzt und parallel sind, und wenigstens eine Querkante (22) aufweist, welche die zwei Flächen (20, 21) durch zwei Ränder verbindet, und eine wärmedämmende Schutzumhüllung aufweist, in welche die VIP integriert ist, wobei die Umhüllung einen umlaufenden Rahmen (3) aus einem ersten wärmedämmenden Material, vom Typ Polystyrolschaum, umfasst, der den Rand und die Kante der VIP umgibt und damit verbunden ist, und wenigstens zwei Platten (4, 5) aus einem zweiten wärmedämmenden Material, das von dem ersten Material des Rahmens verschieden ist, umfasst, wobei die Platten (4, 5) jede mit einer der Hauptflächen (20, 21) der VIP verbunden sind, indem sie zwei parallele Schichten beiderseits der Flächen (20, 21) der VIP bilden und den Rahmen (3) wenigstens teilweise bedecken, wobei der Rahmen (3) auf einer ersten Fläche eine Längsrille (31) aufweist, in der die Kante (22) der VIP durch Einpassen aufgenommen ist, **dadurch gekennzeichnet, dass** der Rahmen (3) auf jeder von zwei seitlichen Flanken (33, 34), die zu der ersten Fläche entgegengesetzt und quergerichtet sind, einen Längsabsatz (33a, 34A) aufweist, der sich über den Umfang des Rahmens (3) parallel erstreckt und die Platten (4, 5) aus wärmedämmendem Material aufnimmt, wobei die zwei Platten (4, 5) zwei Schichten bilden, die durch Gießen erhalten werden.

2. Erzeugnis nach einem der vorhergehenden Ansprüche, **dadurch gekennzeichnet, dass** es Markierungsmittel für den späteren Zuschnitt des Rahmens (3) aufweist, wobei insbesondere die Markierungsmittel durch die Grenzlinie gebildet sind, die den Rahmen (3) von den Platten (4, 5) trennt.

3. Erzeugnis nach einem der vorhergehenden Ansprüche, **dadurch gekennzeichnet, dass** der umlaufende Rahmen (3) mehrere, insbesondere vier, Profile (30) umfasst, die über ihre distalen Enden, die vorzugsweise abgefast sind, wie in 45 °, aneinanderstoßen.

4. Erzeugnis nach einem der vorhergehenden Ansprüche, **dadurch gekennzeichnet, dass** die zwei Platten (4, 5) aus dem zweiten dämmenden Material, welche die VIP bedecken, wenigstens dem Rahmen (3) gegenüber eine Dicke aufweisen, die geringer als 10 mm, insbesondere wenigstens 2 oder 3 mm, vorzugsweise etwa gleich 5 mm ist.

5. Erzeugnis nach einem der vorhergehenden Ansprüche, **dadurch gekennzeichnet, dass** die Platten (4, 5) aus dem zweiten dämmenden Material aus einem polymeren Dämmmaterial sind, insbesondere aus einem geschäumten organischen Material vom Typ Polyurethan (PU), Polyisocyanurat-Schaum (PIR) oder Phenolschaum, das vorzugsweise einen Wärmeleitkoeffizienten λ aufweist, der kleiner als 0,028 W/mK ist.

6. Erzeugnis nach einem der vorhergehenden Ansprüche, **dadurch gekennzeichnet, dass** es einen flächenbezogenen Transmissionsskoeffizienten U aufweist, der kleiner als 0,015 W/m².K ist.

7. Erzeugnis nach einem der vorhergehenden Ansprüche, **dadurch gekennzeichnet, dass** es wenigstens eine Ausstülpung (7) aufweist, die mit wenigstens einer der Dämmplatten (4, 5) fest verbunden ist, die insbesondere aus dem selben wärmedämmenden Material wie der Rahmen (3) ist, wobei diese Ausstülpung vorzugsweise einen Quaderform hat.

8. Verfahren zum Herstellen eines Erzeugnisses nach einem der vorhergehenden Ansprüche, bei dem:
- ein umlaufender Rahmen (3) aus einem ersten wärmedämmenden Material, insbesondere aus EPS, auf den gesamten Umfang einer Vakuum-Wärmedämmplatte, so genannte VIP (2), gegen die umlaufende Kante (22) der VIP angebracht wird, **dadurch gekennzeichnet, dass** der Rahmen (3) auf einer ersten Fläche eine Längsrille (31) aufweist, in der die Kante (22) der VIP durch Einpassen aufgenommen ist, und auf jeder von zwei seitlichen Flanken (33, 34), die zu der ersten Fläche entgegengesetzt und quergerichtet sind, einen Längsabsatz (33a, 34A) aufweist, der sich über den Umfang des Rahmen parallel erstreckt und die Platten (4, 5) aus wärmedämmendem Material aufnimmt,
- der Rahmen und die VIP in einer Gießform angeordnet werden, wobei der Rahmen ein Abstandselement zwischen den Wänden der Gießform und den Hauptflächen (20, 21) der VIP bildet,
- ein zweites wärmedämmendes Material, vorzugsweise Polyurethan (PU), aus Phenolschaum oder aus Polyisocyanurat-Schaum (PIR), in die Gießform jeder der Hauptflächen (20, 21) der VIP gegenüber eingespritzt wird, um die Flächen sowie Teile des Rahmens zu bedecken,
- die Anordnung entformt wird.

9. Verfahren nach dem vorhergehenden Anspruch, **dadurch gekennzeichnet, dass** der Rahmen (3) mehrere Profile umfasst, die durch Einpassen gegen jede der Seiten der VIP angebracht sind, insbesondere durch Eingriff der Scheibe der VIP in eine Rille (31), die in jedem der Profile gebildet ist.

10. Verfahren nach Anspruch 8 oder 9, **dadurch gekennzeichnet, dass** die Gießform wenigstens eine Aufnahme (63) aufweist, in der, vor Einspritzen des zweiten dämmenden Materials, ein Block aus dem zweiten dämmenden Material eingeführt wird, der einer Ausstülpung (7) entspricht, die in einer der Platten des Erzeugnisses erzeugt wurde, wobei der Block im Abstand zu der VIP angeordnet wird, um ein Volumen zu bilden, das zur Aufnahme des zweiten dämmenden Materials dient, das eingespritzt wird und einer der Dämmschichten entspricht.

## Claims

1. Thermal insulation product in the form of a sheet and comprising at least one vacuum insulation panel (2) referred to as a VIP and having two opposite and parallel main faces (20, 21) and at least one transverse edge face (22) connecting the two faces (20, 21) by two edges, and a thermally insulating protective wrapper in which the VIP is incorporated, in which the wrapper comprises a peripheral surround (3) made of a first thermally insulated material, of the expanded polystyrene type, surrounding and associated with the edge and the edge face of the VIP, and at least two panels (4, 5) made from a second thermally insulating material distinct from the first material of the surround, the panels (4, 5) each being associated with one of the main faces (20, 21) of the VIP by forming two parallel layers one on each side of the said faces (20, 21) of the VIP and at least partially overlapping the surround (3), the said surround (3) comprising on a first face a longitudinal groove (31) in which the edge face (22) of the VIP is nested, **characterized in that** the surround (3) comprises, on each of two opposite lateral flanks (33, 34) which are transverse with respect to the first face, a longitudinal shoulder (33A, 34A) extending around the periphery of the surround (3) in parallel and accommodating the said panels (4, 5) of thermal insulation material, the two panels (4, 5) forming two layers obtained by moulding.

2. Product according to any one of the preceding claims, **characterized in that** it comprises identification means for the purposes of later cutting of the surround (3), the said identification means notably being formed by the demarcation line separating the surround (3) from the panels (4, 5).

3. Product according to any one of the preceding claims, **characterized in that** the peripheral surround (3) comprises several profile sections (30), particularly four of these, which are butted together via their distal ends, preferably bevelled for instance at 45° for example.

4. Product according to any one of the preceding claims, **characterized in that** the two panels (4, 5) of the second insulating material covering the VIP have, at least facing the surround (3), a thickness of less than 10 mm, in particular of at least 2 or 3 mm, preferably of the order of 5 mm.

5. Product according to any one of the preceding claims, **characterized in that** the panels (4, 5) of the second insulating material are made from an insulating polymer material, particularly a foamed organic material of the polyurethane (PU), polyisocyanurate foam (PIR) or phenolic foam type, preferably having a thermal conductivity coefficient λ of less than 0.028 W/mK.

6. Product according to any one of the preceding claims, **characterized in that** it has a surface coefficient of heat transfer U of less than 0.015 W/m².K.

7. Product according to any one of the preceding claims, **characterized in that** it comprises at least one protrusion (7) secured to at least one of the insulating panels (4, 5), notably made of the same first thermally insulating material of the surround (3), this protrusion preferably being of parallelepipedal shape.

8. Method of manufacturing a product according to one of the preceding claims, in which:
- a peripheral surround (3) made of a first thermally insulating material, notably of EPS, is attached to the entirety of the periphery of a vacuum insulation panel (2) referred to as a VIP, against the peripheral edge face (22) of the VIP, **characterized in that** the said surround (3) comprises, on a first face, a longitudinal groove (31) in which the edge face (22) of the VIP is nested, and, on each of two opposite lateral flanks (33, 34) transverse to the first face, a longitudinal shoulder (33A, 34A) extending along the periphery of the surround in parallel and accommodating the said panels (4, 5) of thermal insulation material,
- the surround and the VIP are placed in a mould, the surround forming a spacer between the walls of the mould and the main faces (20, 21) of the VIP,
- a second thermal insulation material, preferably polyurethane (PU), phenolic foam or polyisocyanurate foam (PIR), is injected into the mould opposite each of the main faces (20, 21) of the VIP so as to cover the said faces and portions of the surround,
- the assembly is removed from the mould.

9. Method according to the preceding claim, **characterized in that** the surround (3) comprises several profile sections which are attached by nesting against each of the sides of the VIP, particularly by engaging the edge face of the VIP in a groove (31) formed in each of the profile sections.

10. Method according to Claim 8 or 9, **characterized in that** the mould comprises at least one housing (63) into which, before the second insulating material is injected, there is introduced a block of a second insulating material corresponding to a protrusion (7) generated on one of the panels of the product, the block being positioned some distance away from the VIP so as to create a volume intended to accommodate the second insulating material injected and corresponding to one of the insulating layers.
